# EUROPEAN PATENT APPLICATION

(11) **EP 2 977 899 A2**
(43) Date of publication of application: **27.01.2016**
(21) Application number: 15173684.0
(22) Date of filing: 24.06.2015
(51) Int. Cl.: G06F 9/50

(54) **INTEGRATING EXECUTION OF COMPUTING ANALYTICS WITHIN A MAPREDUCE PROCESSING ENVIRONMENT**

(30) Priority: 27.06.2014 US 201414317687
(71) Applicant: General Electric Company, Schenectady, NY 12345 (US)
(72) Inventor: PUIG, Ernest Charles, Atlanta, GA 30339 (US); INTERRANTE, John A., Niskayuna, NY 12309 (US); OSBORN, Mark David, Schenectady, NY 12345 (US); POOL, Eric, Atlanta, GA 30339 (US)
(74) Representative: Cleary, Fidelma

(57) **Abstract**

Embodiments of the disclosure can include MapReduce systems and methods with integral mapper and reducer compute runtime environments. An example system with an integral reducer compute runtime environment can include mappers (225) and reducers (250) executable on a computer cluster (215). The mappers can be operable to receive raw input data (245) and generate first input data based on the raw input data (245). The mappers (225) can be operable to generate first result data based on the first input data. Based on the first result data, the mappers (225) can be operable to generate (K, V) pairs (275). The reducers (250) can be operable to receive the (K, V) pairs (275) and generate second input data based on the (K, V) pairs (275). The reducers (250) can be operable to transmit the second input data to integral compute runtime environment being run within the reducers (250) and operable to generate second result data based on the second input data. Based on the second result data, the reducers (250) can be operable to generate output data.

## Description

### TECHNICAL FIELD

This disclosure relates generally to data processing, and more particularly, to systems and methods for integrating execution of computing analytics within a MapReduce processing environment.

### BACKGROUND

Cluster-based computer systems have been gaining popularity in high-performance computing. Generally, a computer cluster is a set of connected computers operating together as a single unit to execute one or more application programs. Cluster-based computer systems can provide relatively high availability, reliability, and serviceability compared to other types of available computer systems.

Cluster-based computer systems have been used for performing computations within certain frameworks, such as a MapReduce processing model. A MapReduce processing model, for example, can be used for parallel and distributed processing of large-scale data sets on computer clusters. More particularly, a MapReduce processing model can facilitate distributed computing of large data sets on a single or several clusters of computers. Operationally, the MapReduce processing model can include three steps. A "map" step can be executed by one or more mappers or mapper instances responsible for filtering and sorting data, and separating the input data out into (key, value) pairs, also known as (K,V) pairs, and (k,v) pairs. Multiple mapping steps can be implemented independent of each other and can be performed in parallel. The MapReduce processing model can also include a "shuffle" step where the same (key,value) pairs from different mappers are brought together, sorted and transferred to the next step of processing. The MapReduce processing model can also include a "reduce" step, executed by one or more reducers or reducer instances responsible for summarizing or reduction data. During the "reduce" step, all values associated with a unique key are available for analysis. The "reduce" step can be performed after a mapping step is completed. Typically, the "map" and "reduce" steps are exposed while the "shuffle" step is internal to the framework.

Typically, processing large data sets using a MapReduce processing model can involve mapping input data according to a mapping procedure on an initial cluster-based computer system. During the mapping, mapper instance(s) receive a subset of input data that has been split into a plurality of data segments. The mapper instance(s) can then parse the received input data to potentially emit (key, value) pairs. After the mapping step, the (key, value) pairs are transmitted to reduce instance(s). During the execution of the reduce instance(s), the received (key, value) pairs can be transmitted over a network to a second cluster based computer system for processing. After the processing is complete, the processed (key, value) pairs can normally be transmitted to the initial cluster based computer system for optionally further processing in the reduce instance(s) according to a procedure of the MapReduce processing model.

### SUMMARY OF THE DISCLOSURE

This disclosure relates to systems and methods for integrating execution of computing analytics within a MapReduce processing environment. In particular, certain embodiments of the disclosure relate to MapReduce systems and methods with an integral mapper and/or reducer compute runtime environment.

According to one embodiment of the disclosure, a MapReduce system with an integral reducer compute runtime environment is provided. The system can include one or more mappers and one or more reducers executable on a computer cluster. The mappers can be operable to receive raw input data and generate first input data based at least in part on the raw input data. The mappers are further operable to generate first result data based at least in part on the first input data. Based at least in part on the first result data, the mappers are operable to generate (K, V) pairs. The reducers are operable to receive the (K, V) pairs generated by the mappers. Based at least in part on the (K, V) pairs, the reducers are operable to generate second input data. The reducers are further operable to transmit the second input data, via one or more second proxies associated with the one or more reducers, to at least one integral compute runtime environment. The at least one integral compute runtime environment is run within the one or more reducers and operable to generate second result data based at least in part on the second input data. Based at least in part on the second result data, the reducers are operable to generate output data.

According to another embodiment of the disclosure, a MapReduce system with integral mapper and reducer compute runtime environments is provided. The system comprises one or more mappers and one or more reducers executable on a computer cluster. The mappers are operable to receive raw input data and generate first input data based at least in part on the raw input data. The mappers are further operable to transmit the first input data, via one or more first proxies associated with the one or more mappers, to at least one first integral compute runtime environment. The at least one first integral compute runtime environment can be run within the one or more mappers and be operable to generate first result data based at least in part on the first input data. Based at least in part on the first result data, the mappers are operable to generate (K, V) pairs. The reducers are operable to receive the (K, V) pairs generated by the mappers. Based at least in part on the (K, V) pairs, the reducers are operable to generate second input data. The reducers are further operable to transmit the second input data, via one or more proxies associated with the one or more reducers, to at least one second integral compute runtime environment. The at least one second integral compute runtime environment can be run within the one or more reducers and operable to generate second result data based at least in part on the second input data. Based at least in part on the second result data, the reducers are operable to generate output data.

According to another embodiment of the disclosure, a MapReduce system with an integral mapper compute runtime environment is provided. The system comprises one or more mappers and one or more reducers executable on a computer cluster. The mappers are operable to receive raw input data and generate first input data based at least in part on the raw input data. The mappers are further operable to transmit the first input data, via one or more first proxies associated with the mappers, to at least one integral compute runtime environment. The at least one integral compute runtime environment can be run within the one or more mappers and operable to generate first result data based at least in part on the first input data. Based at least in part on the first result data, the mappers are operable to generate (K, V) pairs. The reducers are operable to receive the (K, V) pairs generated by the one or more mappers. Based at least in part on the (K, V) pairs, the reducers are operable to generate second input data. The reducers are further operable to generate second result data based at least in part on the second input data. Based at least in part on the second result data, the reducers are operable to generate output data.

According to yet another embodiment of the disclosure, a MapReduce system with an integral mapper compute runtime environment is provided. The system can comprise one or more mappers executable on a computer cluster. The mappers can be operable to receive raw input data and generate input data based at least in part on the raw input data. The mappers can be further operable to transmit the input data, via one or more proxies associated with the mappers, to at least one integral compute runtime environment. The at least one integral compute runtime environment can be run within the one or more mappers and operable to generate result data based at least in part on the input data. Based at least in part on the result data, the mappers can be operable to generate result data.

According to yet another embodiment of the disclosure, a MapReduce method with an integral reducer compute runtime environment is provided. The method comprises receiving raw input data by one or more mappers executable on a computer cluster. The method can further comprise generating, by the one or more mappers, first input data based at least in part on the raw input data. Based at least in part on the first input data, first result data is generated by the one or more mappers. Furthermore, based at least in part on the first result data, (K, V) pairs are generated by the one or more mappers. The method can further comprise receiving, by one or more reducers executable on the computer cluster, the (K, V) pairs generated by the one or more mappers. The method can further generate, by the one or more reducers, second input data based at least in part on the (K, V) pairs. The one or more reducers can transmit the second input data, via one or more proxies associated with the one or more reducers, to at least one integral compute runtime environment. The at least one integral compute runtime environment can be run within the one or more reducers and be operable to generate second result data based at least in part on the second input data. Furthermore, the method can comprise generating, by the one or more reducers, output data based at least in part on the second result data.

According to yet another embodiment of the disclosure, a MapReduce method with integral mapper and reducer compute runtime environments is provided. The method can comprise receiving raw input data by one or more mappers executable on a computer cluster. The method can further comprise generating, by the one or more mappers, first input data based at least in part on the raw input data. The one or more mappers can transmit the first input data, via one or more first proxies associated with the one or more mappers, to at least one first integral compute runtime environment. The at least one first integral compute runtime environment can be run within the one or more mappers and operable to generate first result data based at least in part on the first input data. Furthermore, based at least in part on the first result data, (K, V) pairs are generated by the one or more mappers. The method can further comprise receiving, by one or more reducers executable on the computer cluster, the (K, V) pairs generated by the one or more mappers. The method can further generate, by the one or more reducers, second input data based at least in part on the (K, V) pairs. The one or more reducers can transmit the second input data, via one or more second proxies associated with the one or more reducers, to at least one second integral compute runtime environment. The at least one second integral compute runtime environment is run within the one or more reducers and is operable to generate second result data based at least in part on the second input data. Furthermore, the method can comprise generating, by the one or more reducers, output data based at least in part on the second result data.

According to yet another embodiment of the disclosure, a MapReduce method with an integral mapper compute runtime environment is provided. The method can comprise receiving raw input data by one or more mappers executable on a computer cluster. The method can further comprise generating, by the one or more mappers, first input data based at least in part on the raw input data. The one or more mappers can transmit the first input data, via one or more first proxies associated with the one or more mappers, to at least one integral compute runtime environment. The at least one integral compute runtime environment can be run within the one or more mappers and operable to generate first result data based at least in part on the first input data. Furthermore, based at least in part on the first result data, (K, V) pairs can be generated by the one or more mappers. The method further can comprise receiving, by one or more reducers executable on the computer cluster, the (K, V) pairs generated by the one or more mappers. The method can continue with generating, by the one or more reducers, second input data based at least in part on the (K, V) pairs. The one or more reducers generate second result data based at least in part on the second input data. Furthermore, the method can comprise generating, by the one or more reducers, output data based at least in part on the second result data.

According to yet another embodiment of the disclosure, a MapReduce method with an integral mapper compute runtime environment is provided. The method can comprise receiving raw input data by one or more mappers executable on a computer cluster. The method can further comprise generating, by the one or more mappers, input data based at least in part on the raw input data. The one or more mappers can transmit the input data, via one or more proxies associated with the one or more mappers, to at least one integral compute runtime environment. The at least one integral compute runtime environment can be run within the one or more mappers and operable to generate result data based at least in part on the input data. Based at least in part on the result data, the one or more mappers can generate output data.

Other embodiments, systems, methods, features, and aspects will become apparent from the following description taken in conjunction with the following drawings.

### BRIEF DESCRIPTION OF THE DRAWINGS

FIG. 1 is a flow diagram illustrating execution of a MapReduce processing model.
FIG. 2 depicts a block diagram illustrating an example architecture for processing data using a MapReduce framework and third-party computing clusters.
FIG. 3 is a block diagram illustrating an example MapReduce system with an integral reducer compute runtime environment, in accordance with an embodiment of the disclosure.
FIG. 4 is a block diagram showing an example reducer, in accordance with an embodiment of the disclosure.
FIG. 5 is a block diagram illustrating an example MapReduce system with integral mapper and reducer compute runtime environments, in accordance with an embodiment of the disclosure.
FIG. 6 is a block diagram showing an example mapper, in accordance with an embodiment of the disclosure.
FIG. 7 is a block diagram illustrating an example MapReduce system with an integral mapper compute runtime environment, in accordance with an embodiment of the disclosure.
FIG. 8 depicts a flow diagram that illustrates integrating an example integral compute runtime environment into a MapReduce framework, in accordance with an embodiment of the disclosure.
FIG. 9 depicts a process flow diagram illustrating an example MapReduce method with an integral reducer compute runtime environment, in accordance with an embodiment of the disclosure.
FIG. 10 depicts a process flow diagram illustrating an example MapReduce method with integral reducer and mapper compute runtime environments, in accordance with an embodiment of the disclosure.
FIG. 11 depicts a process flow diagram illustrating an example MapReduce method with an integral mapper compute runtime environment, in accordance with an embodiment of the disclosure.
FIG. 12 depicts a process flow diagram illustrating an example MapReduce method with an integral mapper compute runtime environment, in accordance with an embodiment of the disclosure.
FIG. 13 is a block diagram illustrating an example controller for integrating computing analytics within a processing environment, in accordance with an embodiment of the disclosure.

### DETAILED DESCRIPTION

The following detailed description includes references to the accompanying drawings, which form part of the detailed description. The drawings depict illustrations, in accordance with example embodiments. These example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. The following detailed description is, therefore, not to be taken in a limiting sense, and the scope is defined by the appended claims and their equivalents.

The terms "cluster-based computer system," "computer cluster," and "cluster" are used interchangeably herein and can mean a set of connected computers operating together as a single unit to execute one or more application programs.

The terms "MapReduce processing model", "MapReduce framework", and "MapReduce process" are used interchangeably herein and can mean a system, method, or device configured for parallel and distributed processing of large-scale data sets on computer clusters.

Certain embodiments described herein relate to MapReduce systems and methods with integral mapper and/or reducer compute runtime environments. The system and method of the disclosure are directed to executing external, or third-party, computations directly from within the MapReduce framework without the need to send data for processing to an external runtime environment. According to the disclosed embodiments, computations can be executed locally on a machine that is also executing MapReduce functions. Thus, secondary infrastructures, such as third-party processing clusters, and the time to transmit data to and from this infrastructure can be eliminated.

A MapReduce process can include a map step and a reduce step. A map step is typically designed to parallelize input data by splitting the input data from a file system into a plurality of data segments for the cluster to process. Therefore, one or more mappers can convert the plurality of data segments into intermediate (key, value) pairs. The one or more mappers can produce the intermediate (key, value) pairs for a reduce step. During the reduce step, one or more reducers can reduce the intermediate (key, value) pairs into data segments constituting a data set. Further, the one or more reducers can analyze the data set and prepare the data for further analysis. The data segments of the data set can be analyzed in parallel.

According to an embodiment of the disclosure, a compute runtime environment can be integrated into the MapReduce framework. For example, the compute runtime environment can be installed on a server in a Linux folder path, but when referenced by the MapReduce framework, the compute runtime environment can be instantiated within the Java virtual machine running the map and reduce functions. In one embodiment, the integral compute runtime environment can be instantiated in any of the one or more reducers. Therefore, computing analytics can be parallelized directly on the one or more reducers. The MapReduce framework can also include a computation proxy instance that enables sending data to and receiving data from the integral compute runtime environment. In particular, using the computation proxy instance, the one or more reducers can send the data prepared for computing to the integral compute runtime environment. Upon completion of computing analytics performed by the integral compute runtime environment, the one or more reducers can receive the result data from the integral compute runtime environment. Based on the received result data, the one or more reducers can generate the output data that can be sent to the file system, a printer, a display, a cluster, a file storage system, a device, and so forth. Therefore, input data can be stored and advanced analytics can be performed on the input data by a single, integrated system according to an embodiment of the disclosure.

In another embodiment, an integral compute runtime environment can be integrated into the one or more mappers. In such a case, upon receiving input data from a file system, the mappers can use a computation proxy instance to send the input data to the integral compute runtime environment for processing. Upon completion of computing analytics performed by the integral compute runtime environment, the one or more mappers can receive the result data from the integral compute runtime environment. The one or more mappers can process the received result data to generate intermediate (key, value) pairs. The intermediate (key, value) pairs can be sent to one or more reducers. The one or more reducers can receive the intermediate (key, value) pairs and process the intermediate (key, value) pairs into output data. The one or more reducers can send output data to the file system, a device, a display, a file storage system, a printer, and so forth.

In yet another embodiment, an integral compute runtime environment is integrated into both a mapper and a reducer, or in the case of multiple mappers and reducers, into both the mappers and reducers. In any instance, in these embodiments, both the mapper and the reducer, or in the case of multiple mappers and reducers, both the mappers and reducers, can use computation proxy instances to send the data to the integral compute runtime environment for computing.

The described integrated system can eliminate the need for a separate analytic infrastructure. At the same time, the system, according to an embodiment of the disclosure, can be used to process data in computational tools that do not break the MapReduce paradigm. This paradigm can be defined as bringing the processing to the data, thus inverting the traditional approach. Thus, the described technology can allow bringing third-party computation software to the data that exists within the MapReduce framework, rather than sending the data out to a second infrastructure for processing in the third party environment. The system can maintain the MapReduce processing model by sending the process to the data, rather than sending the data to the process.

The technical effects of certain embodiments of the disclosure can include performing analytics locally to the data without the need for an additional processing cluster, thus eliminating separate analytic infrastructure and operational costs while improving runtime performance and significantly reducing network traffic and latency. Further technical effects of certain embodiments of the disclosure can include relatively faster execution time for large-scale data sets.

The following provides the detailed description of various example embodiments related to MapReduce systems and methods with an integral reducer compute runtime environment.

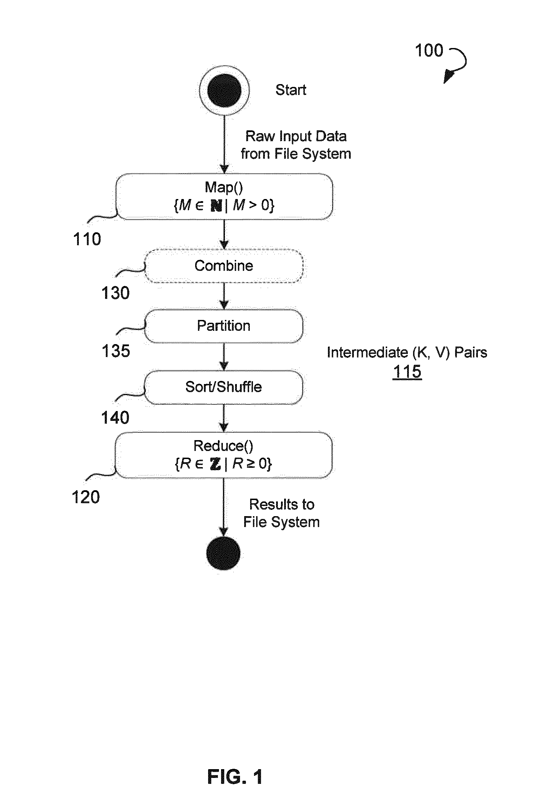

Referring now to the figures, FIG. 1 illustrates a flow diagram 100 for execution of a MapReduce processing model. The MapReduce processing model can comprise one or more mappers 110, each mapper being a group of one or more mapping instances. The number of the mapping instances can range from 1 to M, where M is a natural number. The MapReduce processing model can further comprise one or more reducers 120, each reducer being a group of one or more reducing instances. The number of the reducing instances can depend on the total number of unique key values. In particular, the number of the reducing instances can range from 0 to R, where R is an integer greater than or equal to zero.

A MapReduce process can commence with receiving, by a file system or any other system or device, a user query comprising raw input data. The file system (not shown) can send the raw input data to the one or more mappers 110. The mappers 110 can process the raw input data into intermediate (key, value) pairs shown as intermediate (K, V) pairs 115. The mappers 110 can process the intermediate (K, V) pairs 115 by optionally combining the intermediate (K, V) pairs 115 at block 130. During this combination, the mappers 110 can reduce the total number of the intermediate (K, V) pairs 115 sent to the reducers 120. Furthermore, the mappers 110 can process the intermediate (K, V) pairs 115 by partitioning the intermediate (K, V) pairs 115 at block 135. During the partitioning, the mappers 110 can decide how to map intermediate (K, V) pairs 115 to reducing instances. Furthermore, at block 140, the mappers 110 can sort/shuffle the intermediate (K, V) pairs 115.

The intermediate (K, V) pairs 115 can then be passed to one or more reducers 120 based on a predetermined user-configured heuristic. According to a reduce function, suitable processing may be conducted by the reducing instances to answer the user query. Before the reduce function has finished executing, the results (i.e., the final processed data) can be written back to the file system or any other system, device, data stream, and so forth.

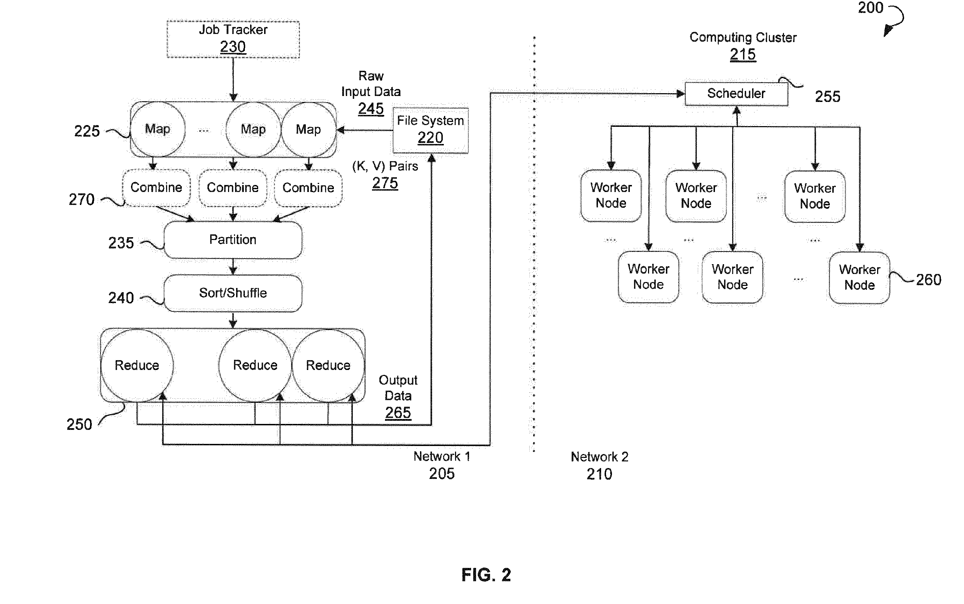

FIG. 2 depicts a block diagram 200 illustrating an example architecture for processing data using a MapReduce framework and third-party computing clusters. The architecture shown can include two networks. Network 1 205 can be associated with the MapReduce framework. Network 2 210 can be associated with one or more computing clusters 215. A file system 220, or any other system, device, data stream, and so forth, can receive raw input data 245 and send the raw input data 245 to one or more mappers 225. A job tracker 230 can be optionally connected to the mapper 225 to track the overall processing. The mapper 225 can process the raw input data 245 into intermediate (K, V) pairs 275. The MapReduce framework (not shown) can optionally combine the data segments at block 270. During the combination, the mapper 225 can reduce the total number of the intermediate (K, V) pairs 275 sent to one or more reducers 250.

The MapReduce framework (not shown) can segment the generated (K,V) pairs generated by the mappers at block 235. During the partitioning, the MapReduce framework (not shown) can decide how to map (K, V) pairs to reducers. Furthermore, the MapReduce framework (not shown) can perform sorting/shuffling of the (K, V) pairs at block 240.

After sorting/shuffling of the (K, V) pairs, the (K, V) pairs can be sent to the reducer 250. The reducer 250 can be connected to the computing cluster 215 located in network 2 210. The computing cluster 215 can include a scheduler 255 that can receive the (K, V) pairs from the reducer 250. The scheduler 255 can send the (K,V) pairs to one or more worker nodes 260 associated with the network 2 210. The worker nodes 260 can process the (K,V) pairs (for example, perform computations on the plurality of the data segments in parallel). The resulting processed data can be sent to the scheduler 255. The scheduler 255 can send the resulting data to the reducer 250 in network 1 205. The reducer 250 can receive the resulting data and can write the resulting output data 265 to the file system 220, or any other system, device, data stream, and so forth.

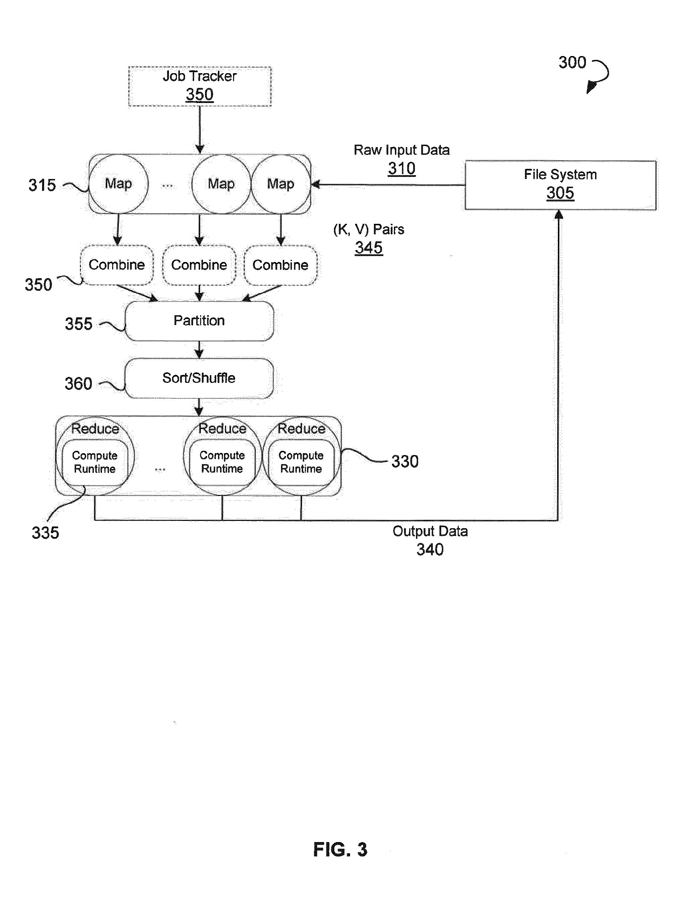

FIG. 3 shows an example MapReduce system 300 with an integral reducer compute runtime environment according to an embodiment of the disclosure. The system 300 can include one or more mappers 315 executable on a computer cluster (not shown). In an example embodiment, the computer cluster can include one or more of the following: a virtual computer cluster, a physical computer cluster, and a combination of virtual and physical computer clusters. The mappers 315 are operable to receive raw input data 310 from a file system 305, or any other device, display, system, printer, and so forth. In an example embodiment, the system 300 optionally can include a job tracker 350 connected to the mappers 315 to track the overall processing. The mappers 315 are further operable to generate first input data (not shown) based at least in part on the raw input data 310. The mappers 315 are further operable to generate first result data (not shown) based at least in part on the first input data. The mappers 315 are further operable to generate (K, V) pairs 345 based at least in part on the first result data. In an example embodiment, the mappers 315 can generate (K, V) pairs 345 based on the first result data. The mappers 315 can optionally combine the (K, V) pairs 345 at block 350. During the combining, the mappers 315 can reduce the total number of the intermediate (K, V) pairs 345 sent to the reducers 330. The mappers 315 can further perform partitioning of the (K, V) pairs 345 at block 355. During the partitioning, the mappers 315 can decide how to map (K, V) pairs 345 to the reducers 330. Furthermore, the MapReduce framework (not shown) can perform sorting/shuffling of the (K, V) pairs 345 at block 360.

The system 300 can further include one or more reducers 330 executable on a computer cluster. The reducers 330 are operable to receive the (K, V) pairs 345 generated by the mappers 315 after sorting/shuffling at block 360 of the (K, V) pairs 345 by the MapReduce framework (not shown) and generate second input data (not shown) based at least in part on the (K, V) pairs 345. The reducers 330 are further operable to transmit the second input data to at least one integral compute runtime environment 335. The integral compute runtime environments 335 can include one or more of the following: a numeric compute runtime environment, an alphanumeric compute runtime environment, a textual compute runtime environment, a media compute runtime environment, an image compute runtime environment, and so forth. The reducers 330 can transmit the second input data to the integral compute runtime environments 335 via one or more proxies (not shown) associated with the reducers 330. The integral compute runtime environments 335 can be run within the reducers 330. The integral compute runtime environments 335 are operable to generate second result data (not shown) based at least in part on the second input data. The reducers 330 are operable to receive the second result data from the integral compute runtime environments 335. Based at least in part on the second result data, the reducers 330 are operable to generate output data 340. In an example embodiment, the reducers 330 are further operable to trigger one or more events based at least in part on the output data. The events can include additional mapper-reducer processes, alerts, and so forth. In a further example embodiment, the reducers 330 are operable to transmit the output data to one or more of the following: the file system 305, a device, a display, a file storage system, a printer, and so forth.

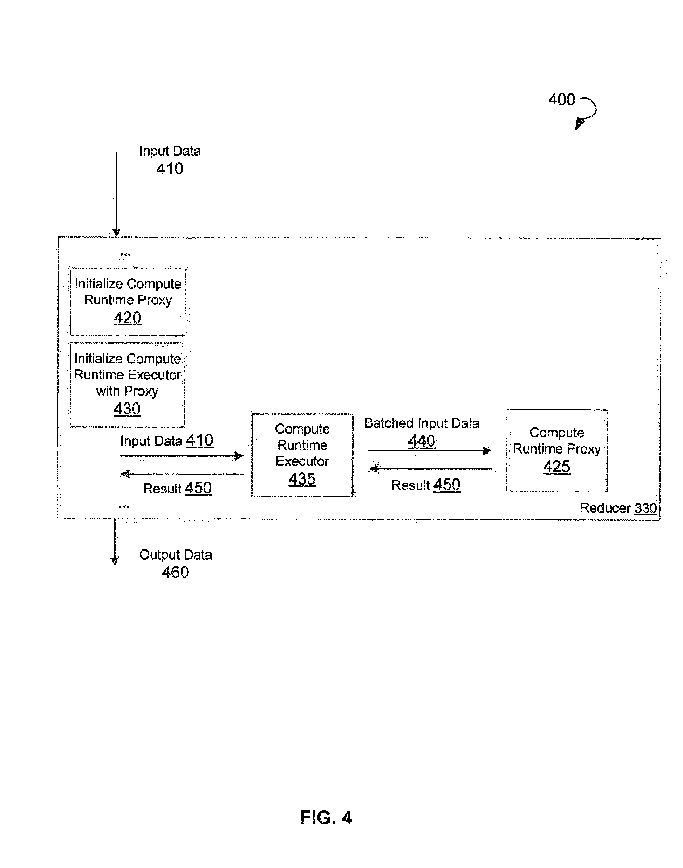

FIG. 4 is a block diagram 400 showing the reducer 330 of the example system 300 represented in FIG. 3. In the embodiment shown in FIG. 4, the reducer 330 can receive (K, V) pairs shown as input data 410. The reducer 330 can initialize a compute runtime proxy 425 at block 420. At block 430, the reducer 330 can initialize a compute runtime executor 435. The reducer 330 can process the input data 410 to generate input data 410 for processing by the compute runtime executor 435. In one example embodiment, the processed input data 410 can include data in a Matlab format. Thereafter, the reducer 330 can send the input data 410 to the compute runtime executor 435. The compute runtime executor 435 can perform batching of the input data 410 and sending batched input data 440 to the compute runtime proxy 425. As used herein, batching includes collecting input data into batches or sets of data and processing each batch as a unit. The compute runtime proxy 425 can process the batched input data 440 to obtain result 450. The compute runtime executor 435 can receive the result 450 and send the result to the reducer 330. The reducer 330 can receive result 450 from the compute runtime executor 435 and process the received result 450 into output data 460.

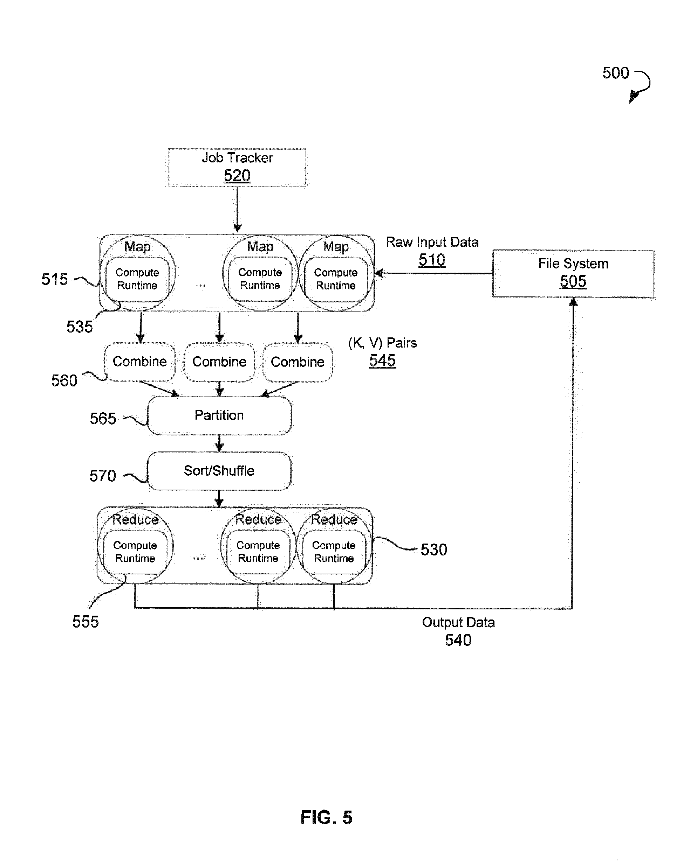

FIG. 5 shows an example MapReduce system 500 with an integral mapper and reducer compute runtime environment according to an embodiment of the disclosure. The system 500 can include one or more mappers 515 executable on a computer cluster (not shown). In an example embodiment, the computer cluster can include one or more of the following: a virtual computer cluster, a physical computer cluster, and a combination of virtual and physical computer clusters. The mappers 515 are operable to receive raw input data 510 from a file system 505, or any other device, display, system, printer, and so forth. In an example embodiment, the system 500 optionally can include a job tracker 520 connected to the mappers 515 to track overall processing. The mappers 515 are further operable to generate first input data (not shown) based at least in part on the raw input data 510. The mappers 515 are further operable to transmit the first input data to at least one first integral compute runtime environment 535. The mappers 515 can transmit the first input data to the first integral compute runtime environments 535 via one or more proxies (not shown) associated with the mappers 515. The first integral compute runtime environments 535 can include one or more of the following: a numeric compute runtime environment, an alphanumeric compute runtime environment, a textual compute runtime environment, a media compute runtime environment, an image compute runtime environment, and so forth. The first integral compute runtime environments 535 can be run within the mappers 515 and operable to generate first result data (not shown) based at least in part on the first input data. The mappers 515 are further operable to generate (K, V) pairs 545 based at least in part on the first result data. In an example embodiment, the MapReduce framework (not shown) can optionally combine the (K, V) pairs 545 at block 560. During the combination, the mappers 515 can reduce the total number of the intermediate (K, V) pairs 545 sent to the reducers 530. The mappers 515 can further perform partitioning of the (K, V) pairs 545 at block 565. During the partitioning, the mappers 515 can decide which (K, V) pairs 545 go to which reducers 530. Furthermore, the mappers 515 can perform sorting/shuffling of the (K, V) pairs 545 at block 570.

The system 500 can further include one or more reducers 530 executable on a computer cluster. After sorting/shuffling, at block 570, of the (K, V) pairs 545 by the mappers 515, mappers 515 send the (K, V) pairs 545 to one or more reducers 530. The reducers 530 are operable to receive the (K, V) pairs 545 generated by the mappers 515 and generate second input data (not shown) based at least in part on the (K, V) pairs 545. The reducers 530 are further operable to transmit the second input data to at least one second integral compute runtime environment 555. The second integral compute runtime environments 555 can include one or more of the following: a numeric compute runtime environment, an alphanumeric compute runtime environment, a textual compute runtime environment, a media compute runtime environment, an image compute runtime environment, and so forth. The reducers 530 can transmit the second input data to the second integral compute runtime environments 555 via one or more proxies (not shown) associated with the reducers 530. The second integral compute runtime environments 555 can be run within the reducers 530. The second integral compute runtime environments 555 are operable to generate second result data (not shown) based at least in part on the second input data. The reducers 530 are operable to receive the second result data from the second integral compute runtime environments 555. Based at least in part on the second result data, the reducers 530 are operable to generate output data 540. In an example embodiment, the reducers 530 are further operable to trigger one or more events based at least in part on the output data 540. The events can include additional mapper-reducer processes, alerts, and so forth. In a further example embodiment, the reducers 530 are operable to transmit the output data 540 to one or more of the following: the file system 505, a device, a display, a file storage system, a printer, and so forth.

The reducer 530 of the system 500 can be similar to reducer 330 shown on FIG. 4.

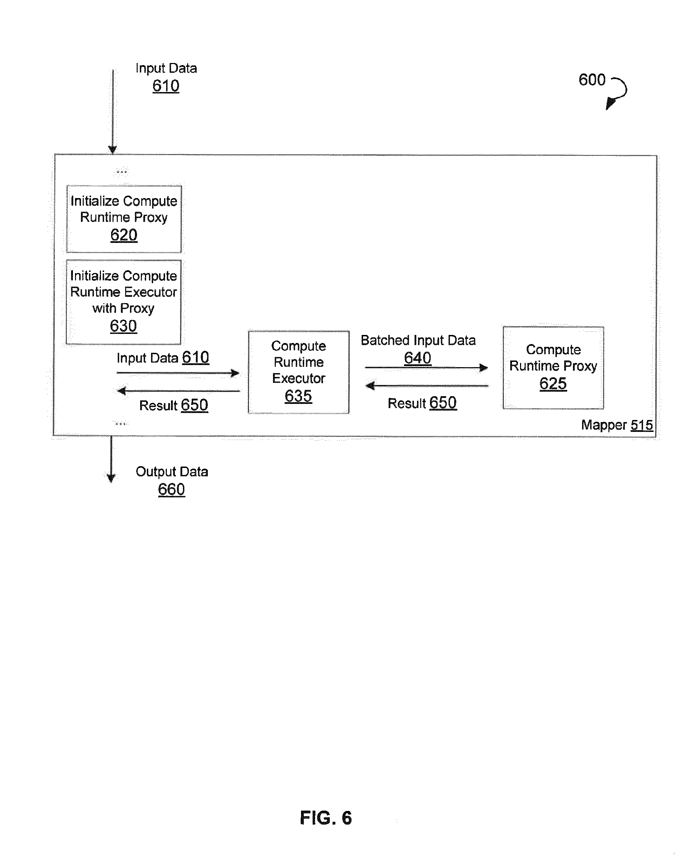

FIG. 6 is a block diagram 600 showing the mapper 515 of the system 500 represented on FIG. 5. In the embodiment shown in FIG. 6, the mapper 515 can receive input data 610 from a file system (not shown). The mapper 515 can initialize compute runtime proxy 625 at block 620. At block 630, the mapper 515 can initialize compute runtime executor 635. The mapper 515 can process the input data 610 to generate input data 610 for processing by the compute runtime executor 635. The mapper 515 can send the input data 610 to the compute runtime executor 635. In one example embodiment, the processed input data 610 can include data in a Matlab format. The compute runtime executor 635 can perform batching of the input data 610 and sending batched input data 640 to the compute runtime proxy 625. As used herein, batching can include collecting input data into batches or sets of data and processing each batch as a unit. The compute runtime proxy 625 can process the batched input data 640 to obtain result 650. The compute runtime executor can receive the result 650 and send the result 650 to the mapper 515. The mapper 515 can receive result 650 from the compute runtime executor 635 and process the received result 650 into output data 660.

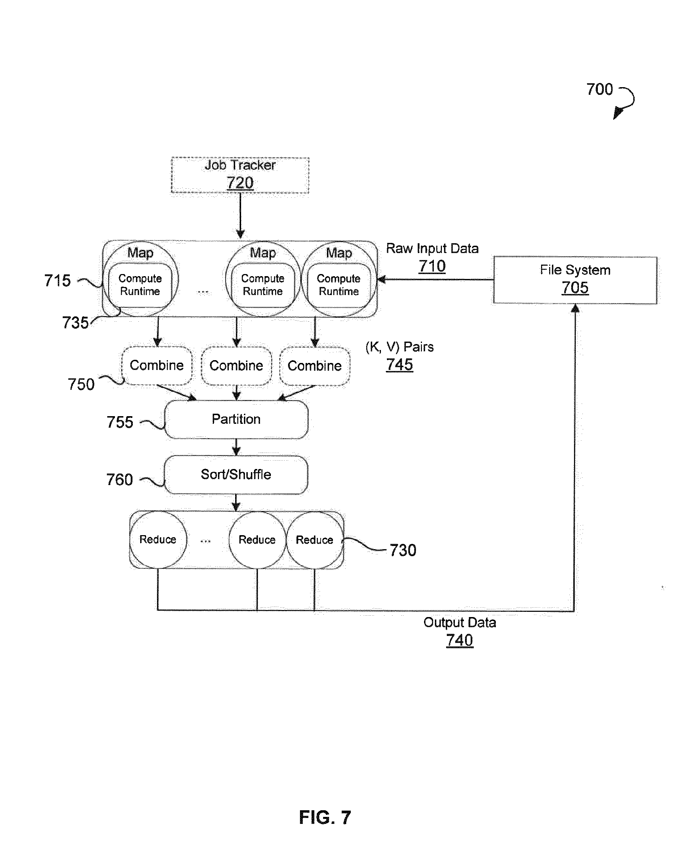

FIG. 7 shows an example MapReduce system 700 with an integral mapper compute runtime environment according to an embodiment of the disclosure. The system 700 can include one or more mappers 715 executable on a computer cluster (not shown). In an example embodiment, the computer cluster can include one or more of the following: a virtual computer cluster, a physical computer cluster, and a combination of virtual and physical computer clusters. The mappers 715 are operable to receive raw input data 710 from a file system 705, or any other device, display, system, printer, and so forth. In an example embodiment, the system 700 optionally can include a job tracker 720 connected to the mappers 715 to track the overall processing. The mappers 715 are further operable to generate first input data (not shown) based at least in part on the raw input data 710. The mappers 715 are further operable to transmit the first input data to at least one integral compute runtime environment 735. The mappers 715 can transmit the first input data to the integral compute runtime environments 735 via one or more proxies (not shown) associated with the mappers 715. The integral compute runtime environments 735 can include one or more of the following: a numeric compute runtime environment, an alphanumeric compute runtime environment, a textual compute runtime environment, a media compute runtime environment, an image compute runtime environment, and so forth. The integral compute runtime environments 735 can be run within the mappers 715 and operable to generate first result data (not shown) based at least in part on the first input data. The mappers 715 are further operable to generate (K, V) pairs 745 based at least in part on the first result data. In an example embodiment, the MapReduce framework (not shown) can optionally combine the (K, V) pairs 745 at block 750. During the combining, the MapReduce framework (not shown) can reduce the total number of the intermediate (K, V) pairs 745 sent to reducers 730. The MapReduce framework (not shown) can further perform partitioning of the (K, V) pairs 745 at block 755. During the partitioning, the MapReduce framework (not shown) can map (K, V) pairs 745 to the reducers 730. Furthermore, the MapReduce framework (not shown) can perform sorting/shuffling of the (K, V) pairs 745 at block 760.

The system 700 can further include one or more reducers 730 executable on a computer cluster. After sorting/shuffling, at block 760, of the (K, V) pairs 745, the mappers 715 can send the (K, V) pairs 745 to the one or more reducers 730. The reducers 730 are operable to receive the (K, V) pairs 745 generated by the mappers 715 and generate second input data (not shown) based at least in part on the (K, V) pairs 745. The reducers 730 are further operable to generate second result data (not shown) based at least in part on the second input data. Based at least in part on the second result data, the reducers 730 are operable to generate output data 740. In an example embodiment, the reducers 730 are further operable to trigger one or more events based at least in part on the output data 740. The events can include additional mapper-reducer processes, alerts, and so forth. In a further example embodiment, the reducers 730 are operable to transmit the output data to one or more of the following: a file system 705, a device, a display, a file storage system, a printer, and so forth.

The mapper 715 of the system 700 can be similar to the mapper 515 shown on FIG. 6.

In some example embodiments, a MapReduce system with an integral mapper compute runtime environment can include one or more mappers executable on a computer cluster. In an example embodiment, the computer cluster can include one or more of the following: a virtual computer cluster, a physical computer cluster, and a combination of virtual and physical computer clusters. The one or more mappers can receive raw input data and generate input data based at least in part on the raw input data. Furthermore, the one or more mappers can be exclusively called upon for transmitting, using one or more proxies associated with the one or more mappers, the input data to at least one integral compute runtime environment. The integral compute runtime environment can include one or more of the following: a numeric compute runtime environment, an alphanumeric compute runtime environment, a textual compute runtime environment, a media compute runtime environment, an image compute runtime environment, and so forth. The integral compute runtime environments can be run within the mappers and operable to generate result data based at least in part on the input data. The one or more mappers can be exclusively called upon for generating output data based at least in part on the result data received from the integral compute runtime environment.

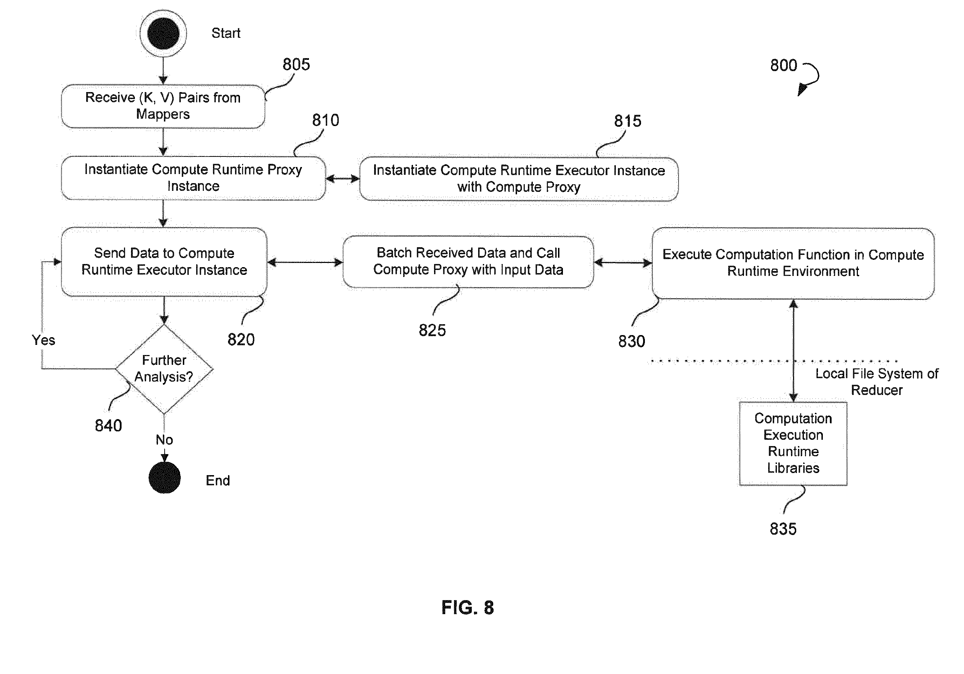

FIG. 8 depicts a flow diagram 800 illustrating integrating an example compute runtime environment into a MapReduce framework, according to an example embodiment of the disclosure. In particular, flow diagram 800 shows the compute runtime environment integrated into a reduce function of the MapReduce framework. The reducer can receive the (K, V) pairs from mappers at block 805, as a result of the mapping step. After receiving the (K, V) pairs, a compute runtime proxy instance (compute analytics) can be instantiated at block 810. Furthermore, a compute runtime executor instance with a compute proxy can be instantiated at block 815. The compute runtime executor can contain/wrap the instantiated proxy instance with functions, including the batching feature.

At block 820, the values of all (K, V) pairs can be sent to the compute runtime executor instance. More specifically, the values of all (K, V) pairs can be sent to the instantiated compute runtime executor that manages the batching capability. Once the compute runtime executor receives the values, the values can be batched in a predetermined way at block 825. Once the values are batched, the compute runtime executor can invoke specific functions of the compute analytics by the instantiated compute runtime proxy. Thus, a subset of the values can be sent to the compute proxy (i.e., a call into the compute proxy with input data is made). The compute proxy can format the values for compatibility with the compute runtime environment. Once the values are formatted, a call into the compute runtime environment can be made at block 830 in order to execute the computation function.

Computation execution runtime libraries 835 of the compute runtime environment can be present outside of the MapReduce framework. The computation execution runtime libraries 835 can exist on an underlying operating system that is running the MapReduce process. The libraries can be referenced throughout the lifecycle of the instantiated batch instance. The compute runtime environment can include a runtime environment's libraries locally installed on a machine that is executing the reducing function of the MapReduce framework. Once the compute runtime environment calculates a result, the result data can be passed back to the compute proxy instance. The result data can be reformatted into a compatible format for the MapReduce framework. The formatted result data can be returned to the scope of the reducing function shown at block 820. Once the reducing function receives the result data, the reducer has an option, shown in block 840, of exiting after the reducer has written the result data to the file system, or the reducer can re-execute a computation function. Once all of the reducers have executed in the above fashion, the MapReduce query has completed the task.

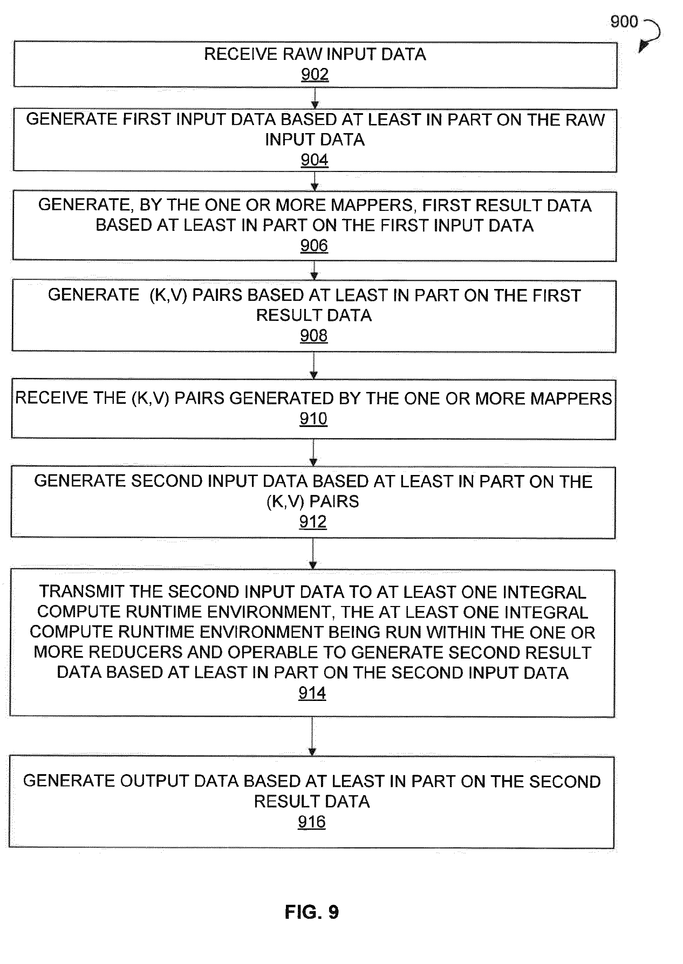

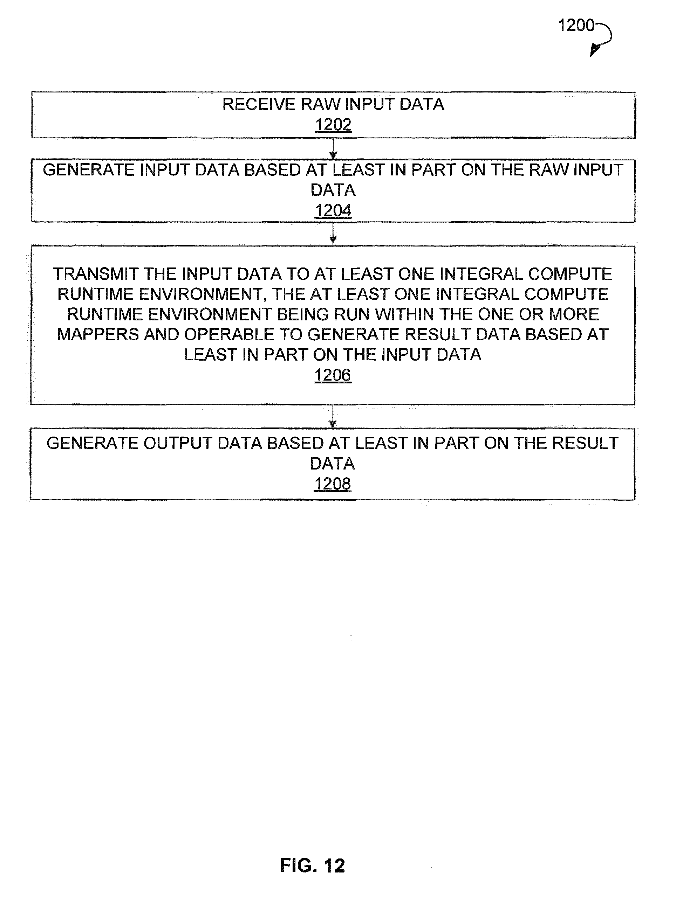

FIG. 9 depicts a process flow diagram illustrating an example MapReduce method 900 with an integral reducer compute runtime environment, in accordance with an embodiment of the disclosure. The method 900 may be performed by processing logic that may include hardware (e.g., dedicated logic, programmable logic, and microcode), software (such as software run on a general-purpose computer system or a dedicated machine), or a combination of both. In one example embodiment, the processing logic can reside at a controller 1200 shown on FIG. 12, which can reside in a user device or in a server. Alternatively, the processing logic can reside, partially or in whole, at local or remote servers or other locations. It will be appreciated by one of ordinary skill in the art that instructions to be executed by the controller 1200 may, in fact, be retrieved and executed by one or more processors. The controller 1200 can also include any number of memory cards, servers, and/or computer discs. Although the controller 1200 is configured to perform one or more operations described herein, other control units may be utilized while still falling within the scope of various embodiments.

Referring to FIG. 9, the example method 900 can commence with receiving raw input data by one or more mappers executable on a computer cluster at block 902. In an example embodiment, the computer cluster can include one or more of the following: a virtual computer cluster, a physical computer cluster, and a combination of virtual and physical computer clusters. After receiving the raw input data, the one or more mappers can generate first input data based at least in part on the raw input data at block 904. The method 900 can continue with generating, by the one or more mappers, first result data based at least in part on the first input data at block 906. Based at least in part on the first result data, the one or more mappers can generate (K, V) pairs at block 908.

Upon generating the (K, V) pairs, the method 900 can continue with receiving, by one or more reducers executable on the computer cluster, the (K, V) pairs generated by the one or more mappers at block 910. Based at least in part on the (K, V) pairs, the one or more reducers can generate second input data at block 912. The one or more reducers can transmit the second input data, via one or more proxies associated with the one or more reducers, to at least one integral compute runtime environment at block 914. In an example embodiment, the at least one integral compute runtime environment can include one or more of the following: a numeric compute runtime environment, an alphanumeric compute runtime environment, a textual compute runtime environment, a media compute runtime environment, and an image compute runtime environment. The at least one integral compute runtime environment can be run within the one or more reducers and operable to generate second result data based at least in part on the second input data. At block 916, the method 900 can include generating, by the one or more reducers, output data based at least in part on the second result data. In further example embodiments, the method 900 can optionally include triggering one or more events based at least in part on the output data. The events can include additional mapper-reducer processes, alerts, and so forth. The method 900 can optionally include transmitting the output data to one or more of the following: a system, a device, a display, a file storage system, a printer, and so forth.

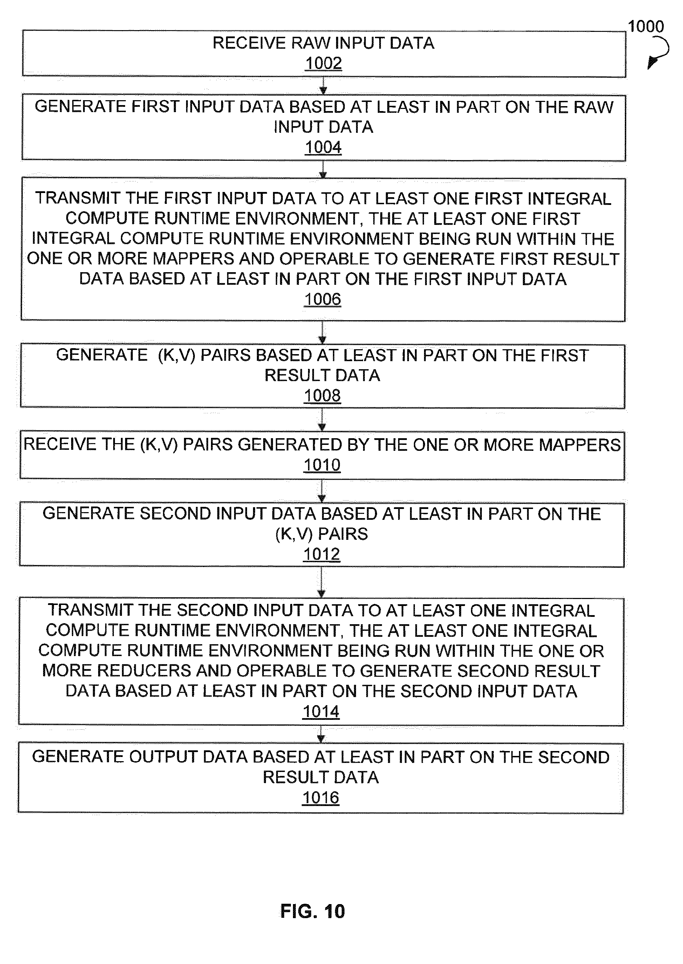

FIG. 10 depicts a process flow diagram illustrating an example MapReduce method 1000 with integral mapper and reducer compute runtime environments, in accordance with an embodiment of the disclosure. The method 1000 can commence with receiving raw input data by one or more mappers executable on a computer cluster at block 1002. In an example embodiment, the computer cluster can include one or more of the following: a virtual computer cluster, a physical computer cluster, and a combination of virtual and physical computer clusters. After receiving the raw input data, the one or more mappers can generate first input data based at least in part on the raw input data at block 1004. The method 1000 can continue with transmitting the first input data, via one or more first proxies associated with the one or more mappers, to at least one first integral compute runtime environment at block 1006. In an example embodiment, the at least first one integral compute runtime environment can include one or more of the following: a numeric compute runtime environment, an alphanumeric compute runtime environment, a textual compute runtime environment, a media compute runtime environment, and an image compute runtime environment. The at least one first integral compute runtime environment can be run within the one or more mappers and operable to generate first result data based at least in part on the first input data. Based at least in part on the first result data, the one or more mappers can generate (K, V) pairs at block 1008.

Upon generating the (K, V) pairs, the method 1000 can continue with receiving, by one or more reducers executable on the computer cluster, the (K, V) pairs generated by the one or more mappers at block 1010. Based at least in part on the (K, V) pairs, the one or more reducers can generate second input data at block 1012. The one or more reducers can transmit the second input data, via one or more proxies associated with the one or more reducers, to at least one second integral compute runtime environment at block 1014. In an example embodiment, the at least one second integral compute runtime environment can include one or more of the following: a numeric compute runtime environment, an alphanumeric compute runtime environment, a textual compute runtime environment, a media compute runtime environment, and an image compute runtime environment. The at least one integral compute runtime environment can be run within the one or more reducers and operable to generate second result data based at least in part on the second input data. At block 1016, the method 1000 can include generating, by the one or more reducers, output data based at least in part on the second result data. In further example embodiments, the method 1000 can optionally include triggering one or more events based at least in part on the output data. The events can include additional mapper-reducer processes, alerts, and so forth. The method 1000 can optionally include transmitting the output data to one or more of the following: a system, a device, a display, a file storage system, a printer, and so forth.

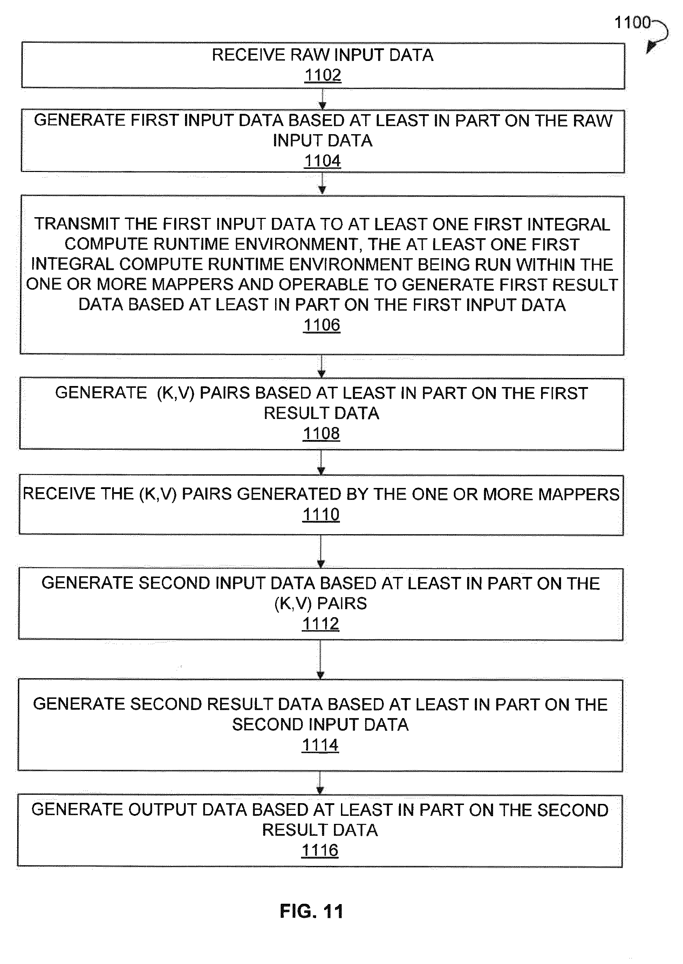

FIG. 11 depicts a process flow diagram illustrating an example MapReduce method 1100 with an integral mapper compute runtime environment, in accordance with an embodiment of the disclosure. The method 1100 can commence with receiving raw input data by one or more mappers executable on a computer cluster at block 1102. In an example embodiment, the computer cluster can include one or more of the following: a virtual computer cluster, a physical computer cluster, and a combination of virtual and physical computer clusters. After receiving the raw input data, the one or more mappers can generate first input data based at least in part on the raw input data at block 1104. The method 1100 can continue with transmitting the first input data, via one or more first proxies associated with the one or more mappers, to at least one integral compute runtime environment at block 1106. In an example embodiment, the at least one integral compute runtime environment includes one or more of the following: a numeric compute runtime environment, an alphanumeric compute runtime environment, a textual compute runtime environment, a media compute runtime environment, and an image compute runtime environment. The at least one integral compute runtime environment can be run within the one or more mappers and operable to generate first result data based at least in part on the first input data. Based at least in part on the first result data, the one or more mappers can generate (K, V) pairs at block 1108.

Upon generating the (K, V) pairs, the method 1100 can continue with, at block 1110, receiving, by one or more reducers executable on the computer cluster, the (K, V) pairs generated by the one or more mappers. Based at least in part on the (K, V) pairs, the one or more reducers can generate second input data at block 1112. The one or more reducers can generate second result data based at least in part on the second input data at block 1114. At block 1116, the method 1100 can include generating, by the one or more reducers, output data based at least in part on the second result data. In further example embodiments, the method 1100 can optionally include triggering one or more events based at least in part on the output data. The events can include additional mapper-reducer processes, alerts, and so forth. The method 1100 can optionally include transmitting the output data to one or more of the following: a system, a device, a display, a file storage system, a printer, and so forth.

FIG. 12 depicts a process flow diagram illustrating an example MapReduce method 1200 with an integral mapper compute runtime environment, in which one or more mappers executable on a computer cluster can be exclusively called upon, in accordance with an embodiment of the disclosure. The method 1200 can commence with receiving raw input data by the one or more mappers at block 1202. In an example embodiment, the computer cluster can include one or more of the following: a virtual computer cluster, a physical computer cluster, and a combination of virtual and physical computer clusters. After receiving the raw input data, the one or more mappers can generate input data based at least in part on the raw input data at block 1204. The method 1200 can continue with transmitting the input data, via one or more proxies associated with the one or more mappers, to at least one integral compute runtime environment at block 1206. In an example embodiment, the at least one integral compute runtime environment includes one or more of the following: a numeric compute runtime environment, an alphanumeric compute runtime environment, a textual compute runtime environment, a media compute runtime environment, and an image compute runtime environment. The at least one integral compute runtime environment can be run within the one or more mappers and operable to generate result data based at least in part on the input data. Based at least in part on the result data, the one or more mappers can generate output data at block 1208. The method 1200 can optionally include transmitting the output data to one or more of the following: a system, a device, a display, a file storage system, a printer, and so forth.

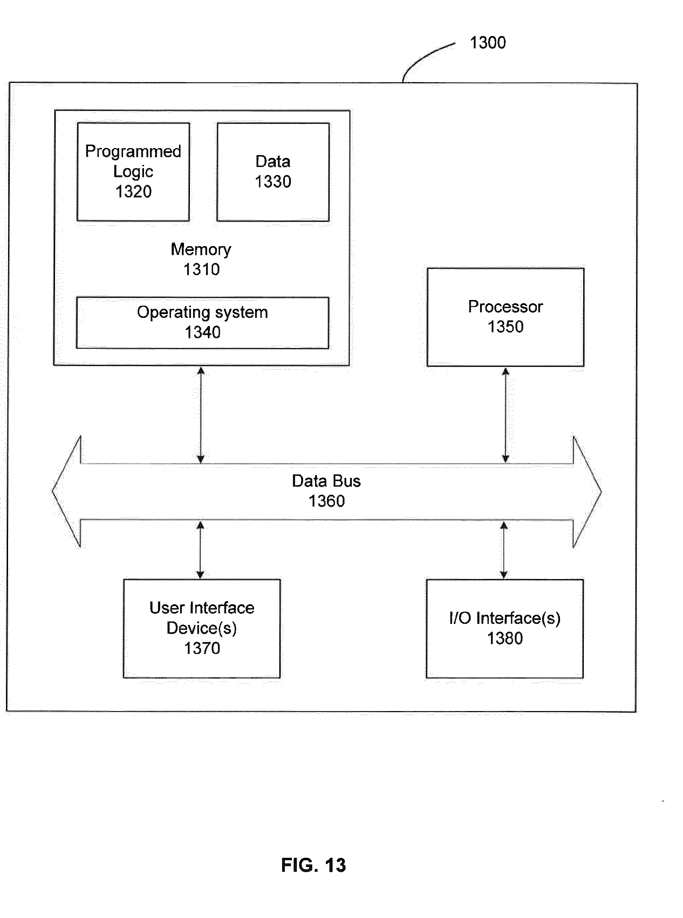

FIG. 13 is a block diagram illustrating an example controller 1300 for integrating computing analytics within a processing environment, in accordance with an embodiment of the disclosure. More specifically, components of the controller 1300 can be used to receive data and a query associated with the data, process the data into a plurality of data segments, format the plurality of data segments into a plurality of formatted data segments, create a plurality of computational instances of the computing analytics, perform computations on the plurality of formatted data segments in parallel, reformat results of the computations, and reduce the reformatted results of the computations into a response to the query. The controller 1300 can include a memory 1310 that stores programmed logic 1320 (e.g., software) and data 1330, such as input data and result data associated with a mapping step and a reducing step, and the like. The memory 1310 also may include an operating system 1340.

A processor 1350 can utilize the operating system 1340 to execute the programmed logic 1320, and in doing so, also utilizes the data 1330. A data bus 1360 can provide communication between the memory 1310 and the processor 1350. Users may interface with the controller 1300 via at least one user interface device 1370, such as a keyboard, mouse, control panel, or any other device capable of communicating data to and from the controller 1300. The controller 1300 can be in communication with external devices via an input/output (I/O) interface 1380.

The controller 1300 and the programmed logic 1320 can include software, hardware, firmware, or any combination thereof. It should also be appreciated that multiple controllers 1300 can be used, whereby different features described herein may be executed on one or more different controllers 1300.

References are made to block diagrams of systems, methods, apparatuses, and computer program products according to example embodiments. It will be understood that at least some of the blocks of the block diagrams, and combinations of blocks in the block diagrams, can be implemented at least partially by computer program instructions. These computer program instructions can be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions can also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions can also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the block or blocks.

One or more components of the systems and one or more elements of the methods described herein may be implemented through an application program running on an operating system of a computer. They also can be practiced with other computer system configurations, including hand-held devices, multiprocessor systems, microprocessor based or programmable consumer electronics, minicomputers, mainframe computers, and the like.

Application programs that are components of the systems and methods described herein include routines, programs, components, data structures, and so forth that implement certain abstract data types and perform certain tasks or actions. In a distributed computing environment, the application program (in whole or in part) can be located in local memory or in other storage. In addition, or alternatively, the application program (in whole or in part) can be located in remote memory or in storage to allow for circumstances where tasks are performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated that the disclosure may be embodied in many forms and should not be limited to the example embodiments described above.

Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A MapReduce system with an integral reducer compute runtime environment, the system comprising:
one or more mappers (225) executable on a computer cluster (215), the one or more mappers (225) operable to:
receive raw input data (245);
generate first input data based at least in part on the raw input data (245);
generate first result data based at least in part on the first input data; and
generate (K, V) pairs (275) based at least in part on the first result data; and
one or more reducers (250) executable on the computer cluster (215), the one or more reducers operable to:
receive the (K, V) pairs (275) generated by the one or more mappers (225);
generate second input data based at least in part on the (K, V) pairs (275);
transmit the second input data, via one or more proxies associated with the one or more reducers (250), to at least one integral compute runtime environment (335), wherein the at least one integral compute runtime environment (335) is run within the one or more reducers (250) and operable to generate second result data based at least in part on the second input data; and
generate output data based at least in part on the second result data.

2. A MapReduce system (500) with integral mapper and reducer compute runtime environments, the system comprising:
one or more mappers (515) executable on a computer cluster (215), the one or more mappers (515) operable to:
receive raw input data (510);
generate first input data (610) based at least in part on the raw input data (510);
transmit the first input data (610) via one or more first proxies (625) associated with the one or more mappers (515), to at least one first integral compute runtime environment (535,635), wherein the at least one first integral compute runtime environment (535,635) is run within the one or more mappers (515) and operable to generate first result data (650) based at least in part on the first input data (610); and
generate (K, V) pairs (545) based at least in part on the first result data (650); and
one or more reducers (530) executable on the computer cluster (215), the one or more reducers (550) operable to:
receive the (K, V) pairs (545) generated by the one or more mappers (515);
generate second input data based at least in part on the (K, V) pairs (545);
transmit the second input data, via one or more second proxies associated with the one or more reducers, to at least one second integral compute runtime environment (555), wherein the at least one second integral compute runtime environment (555) is run within the one or more reducers (550) and operable to generate second result data based at least in part on the second input data; and
generate output data (540) based at least in part on the second result data.

3. A MapReduce system (700) with an integral mapper compute runtime environment, the system comprising:
one or more mappers (715) executable on a computer cluster (215), the one or more mappers operable to:
receive raw input data (710);
generate first input data based at least in part on the raw input data (710);
transmit the first input data, via one or more proxies associated with the one or more mappers, to at least one integral compute runtime environment (735), wherein the at least one integral compute runtime environment (735) is run within the one or more mappers (715) and operable to generate first result data based at least in part on the first input data; and
generate (K, V) pairs (745) based at least in part on the first result data; and
one or more reducers (730) executable on the computer cluster (215), the one or more reducers (730) operable to:
receive the (K, V) pairs (745) generated by the one or more mappers (715);
generate second input data based at least in part on the (K, V) pairs (745);
generate second result data based at least in part on the second input data; and
generate output data (740) based at least in part on the second result data.

4. A MapReduce system with an integral mapper compute runtime environment, the system comprising:
one or more mappers (515) executable on a computer cluster (215), the one or more mappers (515) operable to:
receive raw input data (510);
generate input data (610) based at least in part on the raw input data;
transmit the input data (610), via one or more proxies (625) associated with the one or more mappers (515), to at least one integral compute runtime environment (635), wherein the at least one integral compute runtime environment is run (635) within the one or more mappers (515) and operable to generate result data (650) based at least in part on the input data (610); and
generate output data (660) based at least in part on the result data (650).

5. The system of any of claims 1 to 4, wherein the computer cluster (215) comprises one or more of the following: a virtual computer cluster, a physical computer cluster, and a combination of virtual and physical computer clusters.

6. The system of any of claims 1 to 4, wherein the one or more reducers (250,530,730) are further operable to trigger one or more events based at least in part on the output data.

7. The system of any of claims 1 to 4, wherein the one or more reducers (250,530,730) are further operable to transmit the output data to one or more of the following: a system (305), a device, a display, a file storage system, and a printer.

8. The system of any of claims 1, 3 or 4, wherein the at least one integral compute runtime (335,735,635) environment comprises one or more of the following: a numeric compute runtime environment, an alphanumeric compute runtime environment, a textual compute runtime environment, a media compute runtime environment, and an image compute runtime environment.

9. The system of claim 2, wherein the at least one first integral compute (535,635) runtime environment comprises one or more of the following: a numeric compute runtime environment, an alphanumeric compute runtime environment, a textual compute runtime environment, a media compute runtime environment, and an image compute runtime environment.

10. The system of claim 2, wherein the at least one second integral compute (555) runtime environment comprises one or more of the following: a numeric compute runtime environment, an alphanumeric compute runtime environment, a textual compute runtime environment, a media compute runtime environment, and an image compute runtime environment.
